# EUROPÄISCHE PATENTSCHRIFT

(11) **EP 3 263 302 B1**
(45) Veröffentlichungstag und Bekanntmachung des Hinweises auf die Patenterteilung: **08.04.2020**
(21) Anmeldenummer: 17176820.3
(22) Anmeldetag: 20.06.2017
(51) Int. Cl.: B29B 7/38, B29B 13/08, B29B 7/84, C08J 3/28, C08J 3/20, B29C 48/14, B29C 48/25, B29B 7/72, B29C 48/92, B29B 7/88

(54) **VERFAHREN ZUM AUFBEREITEN EINES KUNSTSTOFFS UND STEUERUNGSVORRICHTUNG DAFÜR**
METHOD FOR CONDITIONING A PLASTIC CONTROL DEVICE THEREFORE
PROCÉDÉ DE PRÉPARATION D'UNE MATIÈRE PLASTIQUE ET APPAREIL DE COMMANDE A CET EFFET

(30) Priorität: 30.06.2016 DE 102016211912
(43) Veröffentlichungstag der Anmeldung: 03.01.2018
(73) Patentinhaber: Robert Bosch GmbH, 70442 Stuttgart (DE)
(72) Erfinder: Apelt, Stefan, 71554 Weissach Im Tal (DE); Bahroun, Karim, 70569 Stuttgart (DE)

(56) Entgegenhaltungen:
- EP-A1- 0 731 129
- WO-A2-2007/145918
- KR-A- 20130 012 395
- US-A1- 2001 030 295

## Beschreibung

### Stand der Technik

Die Erfindung geht aus von einer Vorrichtung oder einem Verfahren nach Gattung der unabhängigen Ansprüche.

Ein Kunststoff kann beispielsweise mittels eines Extruders unter Beimischung von Hilfsstoffen aufbereitet werden.

Aus der KR 2013 0012395 A ist ein Verfahren zur Herstellung eines Plasmabehandelten Verbundwerkstoffs aus Reishülsen und Polypropylen bekannt.

Die EP 0 731129 A1 offenbart einen polymeren Werkstoff sowie ein Verfahren zu dessen Herstellung, wobei Polyolefine einer Niedertemperatur-Plasmabehandlung unterzogen werden.

### Offenbarung der Erfindung

Vor diesem Hintergrund werden mit dem hier vorgestellten Ansatz ein Verfahren zum Aufbereiten eines Kunststoffs, eine Aufbereitungsvorrichtung sowie ein Steuergerät, das dieses Verfahren verwendet, vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Verfahren zum Aufbereiten eines Kunststoffs vorgestellt, wobei das Verfahren folgende Schritte umfasst:
Fördern eines Gemischs aus einem Hilfsstoff und dem Kunststoff in eine Anregungszone einer Aufbereitungsvorrichtung;
Schmelzen des Kunststoffs; und
Anregen des Hilfsstoffes und des Kunststoffs in der Anregungszone, um ein Plasma zum Aufbereiten des Kunststoffs zu bilden, wobei der Hilfsstoff als ein aus dem Kunststoff ausgasender Hilfsstoff, als flüssiger Hilfsstoff oder als mit dem Kunststoff vermischter Hilfsstoff angeregt wird.

Unter einem Kunststoff kann ein einzelner Kunststoff oder ein Gemisch aus verschiedenartigen Kunststoffen verstanden werden. Das Verfahren kann beispielsweise zum Compoundieren des Kunststoffs durchgeführt werden. Beispielsweise kann die Anregungszone in einer Fördereinrichtung zum Fördern des Kunststoffs angeordnet sein. Beispielsweise kann der Kunststoff bei, vor oder nach dem Fördern geschmolzen, homogenisiert, geknetet oder mit einem Druck beaufschlagt werden. Bei dem Hilfsstoff kann es sich beispielsweise um einen festen, flüssigen oder gasförmigen Präkursor oder um ein Hilfsgas handeln. Unter einem Präkursor kann ein schichtbildender oder nicht schichtbildender Ausgangsstoff bei einer chemischen Gasphasenabscheidung verstanden werden. Beispielsweise kann beim Anregen das Plasma durch thermische, chemische oder elektrostatische Anregung des Hilfsstoffes gebildet werden. Hexamethyldisiloxan (HMDSO) ist beispielsweise ein solcher Hilfsstoff.

Gemäß einer Ausführungsform ist die Anregungszone ausgeformt, um ein Ausgasen zumindest eines Hilfsstoffes aus dem Kunststoff zu ermöglichen. Unter Ausgasen kann ein selbstständiges Entweichen von Gasen aus dem Kunststoff verstanden werden. Bei dem Ausgasen kann es sich auch um eine gesteuerte Entfernung von Gasen aus dem Kunststoff handeln, was auch als Entgasen bezeichnet werden kann. In diesem Fall kann die Anregungszone als eine Niederdruckzone ausgeführt sein. Unter einer Niederdruckzone kann ein Bereich der Aufbereitungsvorrichtung verstanden werden, der einen im Vergleich zu einem Umgebungsdruck der Aufbereitungsvorrichtung geringeren Druck aufweist. Alternativ kann in der Anregungszone der Umgebungsdruck, auch atmosphärischer Druck genannt, herrschen. Bei den Zonen handelt es sich gemäß einer Ausführungsform um eine konventionelle Öffnung im Zylinder der Aufbereitungsvorrichtung, auch Compounder genannt. An diese Öffnung wird die Plasmadüse angebracht. Des Weiteren kann die Plasmadüse sowohl im Unterdruck als auch bei Umgebungsdruck betrieben werden.

Somit kann das Gemisch gemäß unterschiedlichen Ausführungsformen in der Anregungszone einem Niederdruck oder einem atmosphärischen Druck ausgesetzt werden. Auch kann das Gemisch einem Überdruck ausgesetzt werden. Beispielsweise kann der Druck innerhalb der Anregungszone so eingestellt werden, dass der Hilfsstoff optimal angeregt werden kann.

Der Hilfsstoff wird im Schritt des Anregens als ausgegaster Hilfsstoff angeregt. Durch das Ausgasen des Hilfsstoffes kann der Hilfsstoff sehr einfach angeregt werden. Alternativ kann der Hilfsstoff als flüssiger Hilfsstoff angeregt werden. Dies bietet sich beispielsweise an, wenn kein Niederdruck zum Ausgasen des Hilfsstoffes erzeugt wird. Zusätzlich oder alternativ kann der Hilfsstoff als mit dem Kunststoff vermischter Hilfsstoff angeregt werden. Dadurch kann die Aufbereitungsvorrichtung sehr einfach realisiert werden, da kein Herauslösen des Hilfsstoffes aus dem Kunststoff erforderlich ist.

Im erfindungsmäßigen Verfahren wird im Schritt des Anregens ferner der Kunststoff angeregt. Dadurch kann die Aufbereitung des Kunststoffes verbessert werden. Bei der Aufbereitung des Kunststoffs, auch Compoundierung genant, kann durch Beimischung zumindest eines Zuschlagstoffes, beispielsweise des Hilfsstoffes ein Eigenschaftsprofil des Kunststoffes geändert werden.

In einem während des Schritts des Aufbereitens durchgeführten Compoundierprozess zum Compoundieren des Kunststoffs kann der beispielsweise aus dem Kunststoff ausgasender Hilfsstoff zu einem Plasma angeregt werden, während der Kunststoff mit einem Unterdruck beaufschlagt wird. Durch die plasmaunterstützte, reaktive Compoundierung, auch PERC-Prozess genannt, bei der das Plasma in einer Niederdruckzone des Compoundierprozesses erzeugt wird, kann eine kontinuierliche Plasmabehandlung oder Plasmabeschichtung des Kunststoffs unter Kontrolle und homogener Zuführung erforderlicher Gase und Präkursoren durchgeführt werden.

Beim Aufbereiten wird gemäß einer Ausführungsform zunächst der erstarrte Kunststoff aufgeschmolzen. Im weiteren Verlauf kann der aufgeschmolzene Kunststoff mit Füll- und/oder Verstärkungsstoffen versehen werden, um gezielte Eigenschaftsmodifikationen vorzunehmen. Als Eigenschaftsmodifikationen können genannt werden: Festigkeit, Zähigkeit, Dehnung usw. Eine solche Eigenschaftsmodifikation erfolgt in der Regel auf physikalischen Weg. Gemäß dem hier beschriebenen Ansatz wird neben der bekannten Eigenschaftsmodifikation zusätzlich mittels chemischen Reaktionen eine intensivere Eigenschaftsmodifikation vorgenommen, bis hin zu einer möglichen chemischen Vernetzung vom Polymer.

Des Weiteren kann dadurch eine Adhäsion zwischen Kunststoff und zugegebenen Additiven oder eine intermolekulare Adhäsion im Kunststoff oder in einer Kunststoffmischung verbessert werden. Zudem wird eine Erzeugung von Nanofüllstoffen wie etwa Gleit-, Haft- oder Nukleierungsmittel oder einer Leitfähigkeit und optischer Eigenschaften in situ ermöglicht. Ein weiterer Vorteil eines derartigen Verfahrens zur plasmainitiierten, reaktiven Compoundierung besteht beispielsweise auch in der Möglichkeit, Vernetzungsreaktionen oder Polymerisationsreaktionen durch einen UV-Anteil im Plasma hervorzurufen.

Das Verfahren umfasst einen Schritt des Schmelzens des Kunststoffs. Der Schritt des Schmelzens kann beispielsweise ausgeführt werden, bevor der Kunststoff in die Aufbereitungsvorrichtung eingefüllt wird oder während sich der Kunststoff in der Aufbereitungsvorrichtung befindet, beispielsweise während des Förderns innerhalb der Aufbereitungsvorrichtung. Durch das Schmelzen des Kunststoffes können Eigenschaften des Kunststoffs verändert und verbessert werden.

Gemäß einer weiteren Ausführungsform kann in einem Schritt des Hinzufügens der Hilfsstoff vor und/oder während des Förderns zu dem Kunststoff hinzugefügt werden. Dadurch kann der Kunststoff in einem Schritt gefördert und mit dem Hilfsstoff vermischt werden. Somit kann die Aufbereitung des Kunststoffs beschleunigt werden.

Es ist vorteilhaft, wenn im Schritt des Schmelzens der Hilfsstoff während des Schmelzens hinzugefügt wird. Dadurch kann eine gleichmäßige Vermischung des Hilfsstoffes mit dem Kunststoff sichergestellt werden.

Des Weiteren kann im Schritt des Hinzufügens ein Gas oder Gasgemisch als der Hilfsstoff hinzugefügt werden. Dadurch kann das Ausgasen des Hilfsstoffes begünstigt werden.

Von Vorteil ist auch, wenn im Schritt des Hinzufügens zumindest ein weiterer Hilfsstoff zu dem Kunststoff hinzugefügt wird. Im Schritt des Förderns kann der Kunststoff in die Anregungszone gefördert werden. Dabei kann gemäß einer Ausführungsform ein Ausgasen des weiteren Hilfsstoffes aus dem Kunststoff ermöglicht werden. Im Schritt des Anregens kann der weitere Hilfsstoff in der Anregungszone angeregt werden, um das Plasma und, zusätzlich oder alternativ, ein weiteres Plasma zum Aufbereiten des Kunststoffs zu bilden. Bei dem weiteren Hilfsstoff kann es sich um einen Stoff mit von dem Hilfsstoff abweichenden Eigenschaften handeln. Entsprechend kann das weitere Plasma von dem Plasma abweichende Eigenschaften aufweisen. Durch diese Ausführungsform wird eine umfassende Beeinflussung und Optimierung des Kunststoffs mithilfe unterschiedlicher Hilfsstoffe ermöglicht.

Das Verfahren kann optional einen Schritt des Zugebens umfassen, in dem dem Kunststoff zumindest ein Zusatzstoff zugegeben wird. Hierbei kann der Zusatzstoff vor dem Hinzufügen und/oder während des Anregens zugegeben werden. Unter einem Zusatzstoff kann ähnlich dem Hilfsstoff ein Stoff zum Beeinflussen von Eigenschaften des Kunststoffs verstanden werden. Der Zusatzstoff kann andere Eigenschaften als der Hilfsstoff aufweisen. Dadurch können die Eigenschaften des Kunststoffs weiter verbessert werden.

Gemäß einer weiteren Ausführungsform kann das Verfahren einen Schritt des Entfernens von beim Anregen entstehenden Abgasen umfassen. Durch diese Ausführungsform kann eine Verunreinigung des Kunststoffs beim Anregen verhindert werden.

Dieses Verfahren kann beispielsweise in Software oder Hardware oder in einer Mischform aus Software und Hardware, beispielsweise in einem Steuergerät, implementiert sein.

Der hier beschriebene Ansatz schafft zudem eine Aufbereitungsvorrichtung zum Aufbereiten eines Kunststoffs, wobei die Aufbereitungsvorrichtung folgende Merkmale aufweist:
eine Anregungszone;
eine Fördereinrichtung, die ausgebildet ist, um ein Gemisch aus einem Hilfsstoff und dem Kunststoff in die Anregungszone zu fördern; und
eine Anregungseinrichtung, die ausgebildet ist, um den Hilfsstoff zu einem Plasma zum Aufbereiten des Kunststoffs anzuregen.

Bei der Aufbereitungsvorrichtung kann es sich beispielsweise um einen Extruder mit einem Schneckenförderer als Fördereinrichtung handeln. Hierbei kann die Anregungszone im Bereich der Fördereinrichtung angeordnet sein. Bei der Anregungseinrichtung kann es sich beispielsweise um eine Strahlenquelle zum Bestrahlen einer Oberfläche des Kunststoffs mit elektromagnetischer Strahlung, beispielsweise mit einem Laserstrahl, handeln. Die Anregungseinrichtung kann zumindest teilweise im Bereich der Anregungszone angeordnet sein.

Gemäß einer Ausführungsform kann die Fördereinrichtung als Schneckenförderer ausgeführt sein. Zusätzlich oder alternativ kann die Fördereinrichtung als Komponente eines Extruders ausgeführt sein. Beispielsweise kann die Fördereinrichtung ausgebildet sein, um den Kunststoff zu einer Austrittsöffnung des Extruders zu fördern. Durch diese Ausführungsform wird eine effiziente Förderung und Aufbereitung des Kunststoffs ermöglicht.

Gemäß einer weiteren Ausführungsform kann die Anregungszone ausgebildet sein, um den Kunststoff mit einem Druck von maximal 1 bar zu beaufschlagen. Dadurch wird ein effizientes Ausgasen des Hilfsstoffes ermöglicht.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Ausführungsbeispiele der Erfindung sind in den Zeichnungen dargestellt und in der nachfolgenden Beschreibung näher erläutert. Es zeigt:
Fig. 1 eine schematische Darstellung einer Aufbereitungsvorrichtung gemäß einem Ausführungsbeispiel;
Fig. 2 eine schematische Darstellung eines Steuergeräts gemäß einem Ausführungsbeispiel; und
Fig. 3 ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

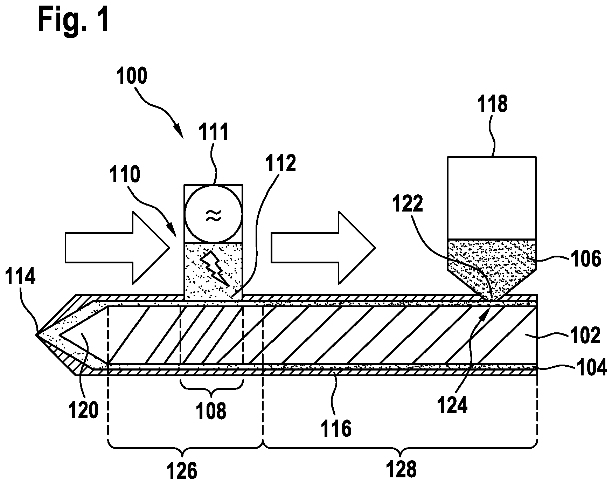

Fig. 1 zeigt eine schematische Darstellung einer Aufbereitungsvorrichtung 100 gemäß einem Ausführungsbeispiel. Die Aufbereitungsvorrichtung 100 umfasst eine Fördereinrichtung 102, hier einen Schneckenförderer, zum Fördern eines Kunststoffs 104. Der Kunststoff 104 ist mit einem Hilfsstoff 106 versetzt, der ausgebildet ist, um beim Beaufschlagen des Kunststoffs 104 mit einem bestimmten Druck aus dem Kunststoff auszugasen. Die Fördereinrichtung 102 ist ausgebildet, um das Gemisch aus dem Kunststoff 104 und dem Hilfsstoff 106 in eine gemäß diesem Ausführungsbeispiel als Niederdruckzone 108 ausgeführte Anregungszone der Aufbereitungsvorrichtung 100 zu fördern, in der ein Druck herrscht, der niedriger als ein Umgebungsdruck der Aufbereitungsvorrichtung 100, genauer der Fördereinrichtung 102, ist. Durch den in der Niederdruckzone 108 herrschenden Unterdruck kommt es zum Ausgasen des Hilfsstoffes 106 aus dem Kunststoff 104. Eine hier angrenzend an die Niederdruckzone 108 angeordnete Anregungseinrichtung 110 mit einer Plasmaquelle 111 ist ausgebildet, um den aus dem Kunststoff 104 ausgasenden Hilfsstoff 106 in einer aktiven Plasmazone zu einem Plasma 112 anzuregen. Mittels des Plasmas 112 können Eigenschaften des Kunststoffs 104 gezielt geändert und verbessert werden.

Gemäß diesem Ausführungsbeispiel ist die Aufbereitungsvorrichtung 100 als Extruder mit einer Austrittsöffnung 114 ausgeführt. Die Fördereinrichtung 102 ist drehbar in einem Gehäuse 116 des Extruders angeordnet und ausgebildet, um den Kunststoff 104 von einer Zugabeeinrichtung 118 zum Zugeben des Hilfsstoffes 106 über die Niederdruckzone 108 zur Austrittsöffnung 114 zu fördern.

Gemäß Fig. 1 weist das Gehäuse 116 im Bereich der Austrittsöffnung 114 einen sich in Richtung der Austrittsöffnung 114 verjüngenden Querschnitt auf, sodass sich eine in Förderrichtung spitz zulaufende Form des Gehäuses 116 ergibt. Die Fördereinrichtung 102 ist an einem der Austrittsöffnung 114 zugewandten Ende mit einer Spitze 120 ausgeformt, deren Kontur im Wesentlichen einer Kontur des sich verjüngenden Querschnitts des Gehäuses 116 entspricht. Die Zugabeeinrichtung 118 ist als Materialbehälter, etwa als Drucktopf, mit einer Auslauföffnung 122 realisiert. Das Gehäuse 116 weist eine Gehäuseöffnung 124 auf, die der Auslauföffnung 122 gegenüberliegend angeordnet ist. Der Hilfsstoff 106 kann somit durch die Auslauföffnung 122 und die Gehäuseöffnung 124 auf die Fördereinrichtung 102 strömen. Die Niederdruckzone 108 ist zwischen der Austrittsöffnung 114 und der Gehäuseöffnung 124 angeordnet.

Wie in Fig. 1 zu erkennen, ist die Fördereinrichtung 102 optional mit einem ersten Gewindeabschnitt 126 und einen an den ersten Gewindeabschnitt 126 angrenzenden zweiten Gewindeabschnitt 128 realisiert, wobei sich eine Steigung des ersten Gewindeabschnitts 126 von einer Steigung des zweiten Gewindeabschnitts 128 unterscheidet. Die Fördereinrichtung 102 ist derart im Gehäuse 116 platziert, dass der erste Gewindeabschnitt 126 zumindest teilweise in der Niederdruckzone 108 liegt und sich der zweite Gewindeabschnitt 128 ausgehend vom ersten Gewindeabschnitt 126 zumindest bis zur Gehäuseöffnung 124 erstreckt. Gemäß diesem Ausführungsbeispiel weist der erste Gewindeabschnitt 126 eine geringere Steigung als der zweite Gewindeabschnitt 128 auf.

Optional dient die Zugabeeinrichtung 118 zum Zugeben von von dem Hilfsstoff abweichenden Zusatzstoffen wie Polymeren oder Präkursoren.

Beim Anregen können optional Präkursoren oder Hilfsgase zugegeben werden. Dies ist durch einen auf die Anregungseinrichtung 110 zeigenden Pfeil gekennzeichnet. Abgase, die beim Anregen entstehen, können optional entfernt werden, beispielsweise durch Absaugung. Dies ist durch einen weiteren Pfeil, der in eine von der Anregungseinrichtung 110 abgewandte Richtung zeigt, gekennzeichnet.

Zur Einstellung eines Eigenschaftsprofils des Kunststoffs 104 wird der Kunststoff 104 je nach Ausführungsbeispiel mit Additiven, Füll-, Zuschlags- oder Verstärkungsstoffen vermischt. Dies kann in einem Compoundierprozess mittels eines Extruders oder Compounders, etwa einem Ein- oder Doppelschneckenextruder, oder mittels eines Kneters als Fördereinrichtung 102 erfolgen. Bei der Compoundierung können mechanische Eigenschaften eines Grundpolymers des Kunststoffs 104 durch Zugeben von Verstärkungs- und Füllstoffen oder durch eine Schlagzähmodifizierung zur Einstellung mechanischer Kenngrößen wie Zugfestigkeit, Bruchdehnung und Schlagzähigkeit verändert werden. Des Weiteren können bei der Compoundierung Farbeinstellungen verändert werden, Stabilisatoren und Stabilisatorsysteme zur Vermeidung eines temperaturinitiierten Kettenabbaus während der Verarbeitung oder in der Anwendung und zur Verbesserung der Witterungsbeständigkeit oder Verarbeitungshilfsstoffe zugegeben werden. Bei der Compoundierung kann der Kunststoff 104 ferner mit einem Flammschutz versehen werden.

Durch die Wahl einer Schneckengeometrie der Fördereinrichtung 102 kann im Compoundierprozess die zur Entgasung einer Schmelze des Kunststoffs 104 nutzbare Niederdruckzone 108 geschaffen werden.

Gemäß einem weiteren Ausführungsbeispiel weist die Aufbereitungsvorrichtung 100 eine Anregungszone 108 auf, in der der atmosphärische Druck herrscht.

Unabhängig von dem in der Anregungszone 108 während des Betriebs der Aufbereitungsvorrichtung 100 herrschenden Drucks kann der Hilfsstoff 106 zum Anregen in der Anregungszone 108 zumindest teilweise aus dem Kunststoff 104 herausgelöst werden. Dabei kann der Hilfsstoff 106 in ausgegaster Form oder in flüssiger Form vorliegen und angeregt werden. Gemäß einem Ausführungsbeispiel wird der Hilfsstoff 106 in der Anregungszone 108 angeregt, während der Hilfsstoff 106 noch mit dem Kunststoff 104 vermischt ist. Gemäß einem Ausführungsbeispiel wird in der Anregungszone 108 nicht nur der Hilfsstoff 106, sondern auch der Kunststoff 104 selbst angeregt.

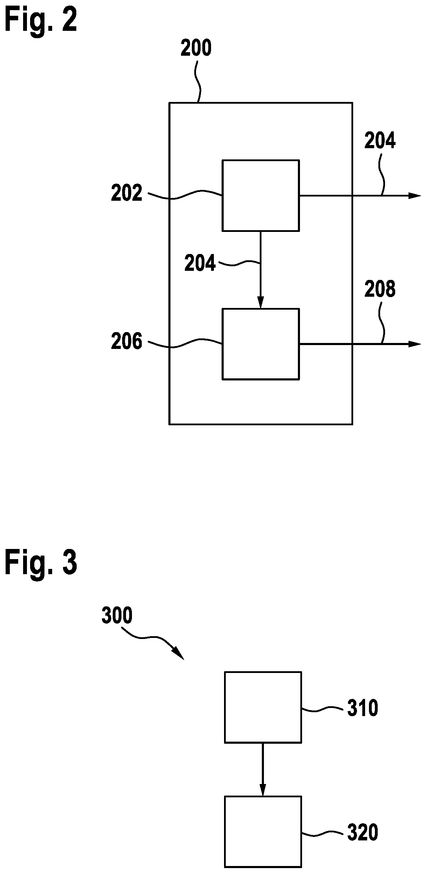

Fig. 2 zeigt eine schematische Darstellung eines Steuergeräts 200 gemäß einem Ausführungsbeispiel. Das Steuergerät 200 kann ausgebildet sein, um eine vorangehend anhand von Fig. 1 beschriebene Aufbereitungsvorrichtung anzusteuern. Das Steuergerät 200 umfasst eine Fördersteuereinheit 202, die ausgebildet ist, um ein Fördersteuersignal 204 zum Ansteuern der Fördereinrichtung der Aufbereitungsvorrichtung zu erzeugen, wobei die Fördereinrichtung ausgebildet ist, um den Kunststoff unter Verwendung des Fördersteuersignals 204 in die Niederdruckzone zu fördern. Des Weiteren umfasst das Steuergerät 200 eine Anregungssteuereinheit 206, die ausgebildet ist, um unter Verwendung des Fördersteuersignals 204 ein Anregungssteuersignal 208 zum Ansteuern der Anregungseinrichtung der Aufbereitungseinrichtung, etwa einer Plasmaquelle der Ansteuerungseinrichtung, zu erzeugen. Hierbei ist die Anregungseinrichtung ausgebildet, um den in der Niederdruckzone ausgasenden Hilfsstoff unter Verwendung des Anregungssteuersignals 208 anzuregen.

Fig. 3 zeigt ein Ablaufdiagramm eines Verfahrens 300 gemäß einem Ausführungsbeispiel. Das Verfahren 300 zum Aufbereiten eines Kunststoffs kann beispielsweise im Zusammenhang mit einem vorangehend anhand von Fig. 2 beschriebenen Steuergerät durchgeführt werden. Hierbei wird in einem Schritt 310 der Kunststoff in die Niederdruckzone der Aufbereitungsvorrichtung gefördert. In einem Schritt 320 wird der in der Niederdruckzone ausgasende Hilfsstoff angeregt, um das Plasma zu erzeugen.

Die Schritte 310, 320 können gleichzeitig durchgeführt werden. Ferner können die Schritte 310, 320 fortlaufend durchgeführt werden.

Die Plasmatechnologie bietet vielfältige Möglichkeiten, Materialien und Oberflächen bezüglich einer jeweiligen Anwendung zu behandeln oder zu beschichten. Die in einem Plasma entstehenden reaktiven Teilchen und der Teilchenbeschuss der Substratoberfläche können bei der Verwendung nicht schichtbildender Gase zu einer gezielten Behandlung des Kunststoffs genutzt werden. Bei einer Plasmabehandlung wird im Gegensatz zu einer Plasmabeschichtung, auch Plasmapolymerisation genannt, keine Schicht auf dem Kunststoff erzeugt. Wesentlich sind hier das Nachvernetzen eines den Kunststoff repräsentierenden Polymers, das Entfernen schwach haftender niedermolekularer Verbindungen auf der Oberfläche des Kunststoffs, die physikalische Modifizierung der Oberfläche durch Teilchenbeschuss, etwa um die Oberfläche aufzurauen, und die chemische Aktivierung durch Erzeugen funktioneller Gruppen oder Oxidation. Werden organische oder andere kettenbildende Monomere als Prozessgase oder Präkursoren, vorangehend auch Hilfsstoff genannt, in das Plasma eingebracht, so wird eine Vernetzungsreaktion initiiert, was auch als Plasmapolymerisation bezeichnet wird. Unter Plasmapolymerisation kann eine plasmaunterstützte chemische Abscheidung aus einer Gasphase verstanden werden. Sie stellt eine weitverbreitete Methode zur Abscheidung dünner Schichten dar. Sowohl die Plasmabehandlung als auch die Plasmapolymerisation können unter Atmosphären- oder Niederdruck durchgeführt werden. Zur Kontrolle der zum Plasma angeregten Gase sollten Niederdruckprozesse bevorzugt werden, da diese zumeist Batchprozesse darstellen. Eine wesentliche Herausforderung in plasmagestützten Niederdruckprozessen besteht in der homogenen Zuführung der anzuregenden Gase und Präkursoren.

Gemäß einem Ausführungsbeispiel werden in einem optionalen Schritt des Verfahrens 300 schichtbildende oder nicht schichtbildende Präkursoren in fester, flüssiger oder gasförmiger Form oder Hilfsgase in einem Compoundierprozess oder einem vorgelagerten Prozessschritt, etwa in einer Druckkammer, zu dem Kunststoff hinzugefügt.

Im Schritt 310 erfolgt dann das Ausgasen der eingebrachten Präkursoren oder Hilfsgase in der Niederdruckzone des Compounders.

Beispielsweise werden im Schritt 310 die Präkursoren oder Hilfsgase mittels elektromagnetischer Wellen, Laser, elektrischer Entladungen oder Ähnlichem zu dem Plasma angeregt.

Das Verfahren 300 bietet folgende Vorteile.

Die Desorption der in den Plasmazustand zu überführenden Stoffe erfolgt unmittelbar an der Oberfläche des Kunststoffs, d. h., die aktive Plasmazone steht in direktem Kontakt mit dem zu funktionalisierenden Substrat in Form des Kunststoffs.

Es kann eine hohe Wirksamkeit und Homogenität des Plasmas gewährleistet werden.

Verbrauchte Prozessgase können in einem optionalen Verfahrensschritt durch Absaugung einfach abtransportiert werden.

Das Substrat, d. h. der Kunststoff, kann kontinuierlich mit frischem Prozessgas versorgt werden.

Optional können weitere Hilfsstoffe in der Niederdruckzone zugegeben werden. Die Zugabe erfolgt beispielsweise im Schritt 310 oder im Schritt 320 oder in beiden Schritten.

Hilfsstoffe in Form von Präkursoren oder Hilfsgasen können im Vergleich zu Kleinstmengen von Pulvern oder feinkernigen Feststoffen einfach dosiert werden.

Eine mittels des Verfahrens 300 erzielte Eigenschaftsverbesserung des compoundierten Kunststoffs ermöglicht den Einsatz wirtschaftlicher Ausgangsstoffe mit ursprünglich schlechteren Materialeigenschaften.

Gemäß einem Ausführungsbeispiel weist das Verfahren 300 den folgenden Prozessablauf auf.

Zunächst erfolgt eine Additivierung des Kunststoffs. Die Additivierung kann optional in einem Drucktopf erfolgen. Beispielsweise erfolgt die Additivierung in einem dem Schritt 310 vorangehenden Verfahrensschritt.

In einem weiteren Schritt wird der Kunststoff in einen Extruder als Fördereinrichtung eingebracht.

Der Kunststoff wird nun im Schritt 310 gefördert, aufgeschmolzen und homogenisiert. In der Kunststoffschmelze wird ferner Druck aufgebaut. Hierbei können weitere Additive, Präkursoren oder Hilfsgasen zugegeben werden. Die Kunststoffschmelze wird in die Niederdruckzone gefördert.

Im Schritt 320 erfolgt die Anregung der aufgrund des Druckabfalls desorbierenden Substanzen in der Niederdruckzone zu einem Plasma, etwa mittels elektromagnetischer Wellen, Laser oder elektrischer Entladungen. Hierbei können in einem optionalen Schritt Abgase aus dem Plasmaprozess entfernt werden. In einem weiteren optionalen Schritt können weitere Präkursoren oder Hilfsgase während des Anregens zugegeben werden.

Die Kunststoffschmelze wird erneut gefördert und homogenisiert.

Schließlich erfolgt in einem weiteren Verfahrensschritt der Austrag der Kunststoffschmelze aus dem Extruder und die Weiterverarbeitung durch Granulierung zu einem spritzgießfähigen Granulat, ein Extrudieren von Halbzeugen oder ein direktes Umformen.

Das Verfahren 300 kann im gesamten Bereich der Kunststofftechnik zum Einsatz kommen, insbesondere zur Compoundierung von Kunststoffen, auch artungleicher Kunststoffe, und zur Mischungserstellung mit schwer compoundierbaren Additiven bei reduziertem Einsatz oder bei Wegfall haftvermittelnder Stoffe.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Aufbereiten eines Kunststoffs (104), wobei das Verfahren (300) folgende Schritte umfasst:
Fördern (310) eines Gemischs aus einem Hilfsstoff (106) und dem Kunststoff (104) in eine Anregungszone (108) einer Aufbereitungsvorrichtung (100);
Schmelzen des Kunststoffs (104); und
Anregen (320) des Hilfsstoffes (106) und des Kunststoffs (104) in der Anregungszone (108), um ein Plasma (112) zum Aufbereiten des Kunststoffs (104) zu bilden, wobei der Hilfsstoff (106) als ein aus dem Kunststoff (104) ausgasender Hilfsstoff (106), als flüssiger Hilfsstoff (106) oder als mit dem Kunststoff (104) vermischter Hilfsstoff (106) angeregt wird

2. Verfahren (300) gemäß Anspruch 1, bei dem das Gemisch in der Anregungszone (108) einem Niederdruck oder einem atmosphärischen Druck ausgesetzt wird.

3. Verfahren (300) gemäß Anspruch 1 oder 2, bei dem im Schritt des Schmelzens der Hilfsstoff (106) während des Schmelzens hinzugefügt wird.

4. Verfahren (300) gemäß einem der vorangegangenen Ansprüche, mit einem Schritt des Hinzufügens des Hilfsstoffes (106) zu dem Kunststoff (104) vor und/oder während des Förderns (310).

5. Verfahren (300) gemäß Anspruch 4, bei dem im Schritt des Hinzufügens ein Gas oder Gasgemisch als der Hilfsstoff (106) hinzugefügt wird.

6. Verfahren (300) gemäß einem der Ansprüche 4 bis 5, bei dem im Schritt des Hinzufügens zumindest ein weiterer Hilfsstoff zu dem Kunststoff (104) hinzugefügt wird, wobei im Schritt des Förderns (310) der Kunststoff (104) in die Anregungszone (108) gefördert wird, wobei im Schritt des Anregens (320) der weitere Hilfsstoff in der Anregungszone angeregt wird, um das Plasma (112) und/oder ein weiteres Plasma zum Aufbereiten des Kunststoffs (104) zu bilden.

7. Verfahren (300) gemäß einem der vorangegangenen Ansprüche, mit einem Schritt des Zugebens zumindest eines Zusatzstoffes zu dem Kunststoff (104), wobei der Zusatzstoff vor dem Hinzufügen und/oder während des Anregens (320) zugegeben wird.

8. Verfahren (300) gemäß einem der vorangegangenen Ansprüche, mit einem Schritt des Entfernens von beim Anregen (320) entstehenden Abgasen.

9. Steuergerät (200) mit Einheiten (202, 206), die ausgebildet sind, um das Verfahren (300) gemäß einem der Ansprüche 1 bis 8 auszuführen und/oder anzusteuern.

10. Steuergerät (200) nach Anspruch 9, wobei die Einheiten (202, 206) ausgebildet sind, um das Verfahren (300) auf einer Aufbereitungsvorrichtung (100) zum Aufbereiten eines Kunststoffs (104) auszuführen und/oder anzusteuern, wobei die Aufbereitungsvorrichtung (100) folgende Merkmale aufweist:
eine Anregungszone (108);
eine Fördereinrichtung (102), die ausgebildet ist, um ein Gemisch aus einem Hilfsstoff (106) und dem Kunststoff (104) in die Anregungszone (108) zu fördern und den Kunststoff (104) aufzuschmelzen; und
eine Anregungseinrichtung (110), die ausgebildet ist, um den Hilfsstoff (106) und den Kunststoff (104) in der Anregungszone (108) zu einem Plasma (112) zum Aufbereiten des Kunststoffs (104) anzuregen, wobei der Hilfsstoff (106) als ein aus dem Kunststoff (104) ausgasender Hilfsstoff (106), als flüssiger Hilfsstoff (106) oder als mit dem Kunststoff (104) vermischter Hilfsstoff (106) anregbar ist.

11. Steuergerät (200) nach Anspruch 10, wobei die Fördereinrichtung (102) als Schneckenförderer und/oder als Komponente eines Extruders ausgeführt ist.

12. Steuergerät (200) nach Anspruch 10 oder 11, wobei die Anregungszone (108) ausgebildet ist, um den Kunststoff (104) mit einem Druck von maximal 1 bar zu beaufschlagen.

## Claims

1. Method (300) for conditioning a plastic (104), wherein the method (300) comprises the following steps:
conveying (310) a mixture of an auxiliary (106) and the plastic (104) into an excitation zone (108) of a conditioning apparatus (100);
melting the plastic (104); and
exciting (320) the auxiliary (106) and the plastic (104) in the excitation zone (108), in order to form a plasma (112) for conditioning the plastic (104), wherein the auxiliary (106) is excited as an auxiliary (106) outgassing from the plastic (104), as a liquid auxiliary (106) or as an auxiliary (106) mixed with the plastic (104).

2. Method (300) according to Claim 1, in which the mixture is subjected to a low pressure or an atmospheric pressure in the excitation zone (108).

3. Method (300) according to Claim 1 or 2, in which, in the melting step, the auxiliary (106) is added during the melting.

4. Method (300) according to one of the preceding claims, with a step of adding the auxiliary (106) to the plastic (104) before and/or during the conveying (310).

5. Method (300) according to Claim 4, in which, in the adding step, a gas or a gas mixture is added as the auxiliary (106).

6. Method (300) according to either of Claims 4 and 5, in which, in the adding step, at least one further auxiliary is added to the plastic (104), wherein, in the conveying step (310), the plastic (104) is conveyed into the excitation zone (108), wherein, in the exciting step (320), the further auxiliary is excited in the excitation zone, in order to form the plasma (112) and/or a further plasma for conditioning the plastic (104).

7. Method (300) according to one of the preceding claims, with a step of additionally introducing at least one additive to the plastic (106), wherein the additive is additionally introduced before the adding and/or during the exciting (320).

8. Method (300) according to one of the preceding claims, with a step of removing waste gases occurring during the exciting (320).

9. Control device (200) comprising units (202, 206) which are designed to perform and/or activate the method (300) according to one of Claims 1 to 8.

10. Control device (200) according to Claim 9, wherein the units (202, 206) are designed to perform and/or activate the method (300) on a conditioning apparatus (100) for conditioning a plastic (104), wherein the conditioning apparatus (100) has the following features:
an excitation zone (108);
a conveying device (102), which is designed to convey a mixture of an auxiliary (106) and the plastic (104) into the excitation zone (108) and to melt the plastic (104); and
an exciting device (110), which is designed to excite the auxiliary (106) and the plastic (104) in the excitation zone (108) to form a plasma (112) for conditioning the plastic (104), wherein the auxiliary (106) can be excited as an auxiliary (106) outgassing from the plastic (104), as a liquid auxiliary (106) or as an auxiliary (106) mixed with the plastic (104).

11. Control device (200) according to Claim 10, wherein the conveying device (102) is configured as a screw conveyor and/or as a component of an extruder.

12. Control device (200) according to Claim 10 or 11, wherein the excitation zone (108) is designed to subject the plastic (104) to a maximum pressure of 1 bar.

## Revendications

1. Procédé (300) de traitement d'une matière synthétique (104), le procédé (300) comprenant les étapes suivantes :
transporter (310) un mélange formé d'un adjuvant (106) et de la matière synthétique (104) jusque dans une zone d'excitation (108) d'un dispositif de traitement (100) ;
faire fondre la matière synthétique (104) ; et
exciter (320) l'adjuvant (106) et la matière synthétique (104) dans la zone d'excitation (108) pour former un plasma (112) destiné à traiter la matière synthétique (104), l'adjuvant (106) étant excité en tant qu'adjuvant (106) de dégazage de la matière synthétique (104), en tant qu'adjuvant liquide (106) ou en tant qu'adjuvant (106) mélangé à la matière synthétique (104).

2. Procédé (300) selon la revendication 1, dans lequel le mélange dans la zone d'excitation (108) est soumis à une basse pression ou une pression atmosphérique.

3. Procédé (300) selon la revendication 1 ou 2, dans lequel l'adjuvant (106) est ajouté à l'étape de fusion lors de la fusion.

4. Procédé (300) selon l'une des revendications précédentes, comprenant une étape d'ajout de l'adjuvant (106) à la matière synthétique (104) avant et/ou pendant le transport (310).

5. Procédé (300) selon la revendication 4, dans lequel un gaz ou un mélange de gaz est ajouté comme adjuvant (106) à l'étape d'addition.

6. Procédé (300) selon l'une des revendications 4 et 5, dans lequel au moins un autre adjuvant est ajouté à la matière synthétique (104) à l'étape d'addition, la matière synthétique (104) étant transportée jusque dans la zone d'excitation (108) à l'étape de transport (310), l'autre adjuvant étant excité dans la zone d'excitation à l'étape d'excitation (320) afin de former le plasma (112) et/ou un autre plasma destiné à traiter la matière synthétique (104).

7. Procédé (300) selon l'une des revendications précédentes, comprenant une étape d'addition d'au moins un additif à la matière synthétique (104), l'additif étant ajouté avant l'addition et/ou pendant l'excitation (320).

8. Procédé (300) selon l'une des revendications précédentes, comprenant une étape d'élimination d'effluents gazeux générés lors de l'excitation (320).

9. Appareil de commande (200) comprenant des unités (202, 206) qui sont conçues pour exécuter et/ou commander le procédé (300) selon l'une des revendications 1 à 8.

10. Appareil de commande (200) selon la revendication 9, les unités (202, 206) étant conçues pour exécuter et/ou commander le procédé (300) sur un dispositif de traitement (100) destiné à traiter un matière synthétique (104), le dispositif de traitement (100) présentant les éléments caractéristiques suivants :
une zone d'excitation (108) ;
un moyen de transport (102) qui est conçu pour transporter un mélange formé d'un adjuvant (106) et de la matière synthétique (104) jusque dans la zone d'excitation (108) et pour faire fondre la matière synthétique (104) ; et
un moyen d'excitation (110) qui est conçu pour exciter l'adjuvant (106) et la matière synthétique (104) dans la zone d'excitation (108) pour obtenir un plasma (112) destiné à traiter la matière synthétique (104), l'adjuvant (106) pouvant être excité en tant qu'adjuvant (106) de dégazage de la matière synthétique (104), en tant qu'adjuvant liquide (106) ou en tant qu'adjuvant (106) mélangé à la matière synthétique (104) .

11. Appareil de commande (200) selon la revendication 10, le moyen de transport (102) étant conçu comme un transporteur à vis et/ou comme un composant d'une extrudeuse.

12. Appareil de commande (200) selon la revendication 10 ou 11, la zone d'excitation (108) étant conçue pour appliquer une pression maximale de 1 bar à la matière synthétique (104).
